# EUROPÄISCHE PATENTSCHRIFT

(11) **EP 0 958 090 B1**
(45) Veröffentlichungstag und Bekanntmachung des Hinweises auf die Patenterteilung: **02.05.2001**
(21) Anmeldenummer: 98901240.6
(22) Anmeldetag: 03.02.1998
(51) Int. Cl.: B23K 9/095

(54) **SCHWEISSSYSTEM UND VERFAHREN ZUM FESTLEGEN DER SCHWEISSPARAMETER FÜR EINE SCHWEISSSTROMQUELLE**
WELDING SYSTEM AND METHOD OF DETERMINING THE WELDING PARAMETERS FOR A WELDING CURRENT SOURCE
SYSTEME DE SOUDAGE ET PROCEDE DE DETERMINATION DES PARAMETRES DE SOUDAGE D'UNE SOURCE DE COURANT DE SOUDAGE

(30) Priorität: 06.02.1997 AT 18397
(43) Veröffentlichungstag der Anmeldung: 24.11.1999
(73) Patentinhaber: FRONIUS Schweissmaschinen Produktion GmbH & Co. KG, 4643 Pettenbach (AT)
(72) Erfinder: HACKL, Heinrich, A-4600 Wels (AT)
(74) Vertreter: Secklehner, Günter, Dr.
(86) Internationale Anmeldenummer: AT9800021
(87) Internationale Veröffentlichungsnummer: WO9834751

(56) Entgegenhaltungen:
- PATENT ABSTRACTS OF JAPAN vol. 18, no. 229 (M-1598), 26.April 1994 & JP 06 023550 A (TOSHIBA CORP.), 1.Februar 1994,
- PATENT ABSTRACTS OF JAPAN vol. 14, no. 271 (M-0983), 12.Juni 1990 & JP 02 080186 A (NEC CORP), 20.März 1990,

## Beschreibung

Die Erfindung betrifft ein Schweißsystem, wie es im Oberbegriff des Anspruches 1 beschrieben ist.

Aus der JP-A1 06 023 550 ist ein Schweißsystem bekannt, bei dem an einer Schweißstromquelle mehrere unterschiedliche Zusatzmodule angeschlossen werden können. Die Zusatzmodule werden durch einen Schweißkopf bzw. einem Schweißbrenner gebildet, wobei jedes Zusatzmodul eine Identifikationseinheit aufweist, über die die Steuervorrichtung elektronisch die Zusatzmodule durch eine Datenabfrage erkennen kann. Bei diesem Schweißsystem werden Identifikationskarten als externe Speicher, auf denen jeweils Daten für ein Zusatzmodul gespeichert sind, eingesetzt. Die Steuervorrichtung der Schweißstromquelle ist mit einem mechanischen Laufwerk verbunden, wobei über dieses mechanische Laufwerk die auf den Identifikationskarten gespeicherten Daten gelesen werden können und anschließend an die Steuervorrichtung weitergeleitet werden, sodaß entsprechend diesen Daten die Steuerung der einzelnen Komponenten, wie beispielsweise der Motoren der Schweißbrenner sowie der Steuerung der Schweißstromquelle, von der Steuervorrichtung durchgeführt werden kann. Nachteilig ist hierbei, daß der Benutzer einer derartigen Schweißanlage bzw. eines derartigen Schweißsystems beim Wechseln des Zusatzmoduls, insbesondere des Schweißkopfes bzw. des Schweißbrenners, eine entsprechende Identifikationskarte mit sich führen muß, sodaß nach dem Verbinden des Zusatzmoduls mit dem Schweißgerät der Benutzer diese Identifikationskarte in das mechanische Laufwerk einstecken kann und somit die Daten von der Identifikationskarte gelesen werden können.

Weiters ist aus der JP-A1 02 080 186 ein Verfahren für die Steuerung einer Laser-Maschine bekannt, wobei über den Laser ein hardwaremäßiger Erkennungscode gelesen werden kann und dieser Code an eine Steuervorrichtung weitergeleitet werden kann.

Es sind bereits einzelne Systeme bekannt, bei denen die Produkteigenschaften auf Etiketten am Produkt angeordnet sind. Diese Produkteigenschaften werden über eine spezielle Lesevorrichtung abgefragt, worauf diese anschließend in einem Computer, wie beispielsweise in einem Lagerverwaltungsprogramm, weiter verarbeitet werden. Nachteilig ist hierbei, daß die abgelesenen Produktdaten nur für spezielle Computerprogramme verwendet werden können und somit keine Steuerung einer Maschine bzw. eines Schweißgerätes möglich ist.

Die Aufgabe der Erfindung liegt darin, ein Schweißgerät bzw. eine Schweißstromquelle und/oder ein Zusatzmodul für ein Schweißgerät und/oder ein Schneidgerät zu schaffen, mit dem das Einlesen von Daten und das Festlegen der Parameter für Schweiß- und/oder Schneidgeräte bzw. Schweißstromquellen exakt und rasch durchgeführt werden kann.

Diese Aufgabe der Erfindung wird durch die Merkmale des Kennzeichenteils des Anspruches 1 gelöst. Vorteilhaft ist hierbei, daß durch das Ablesen der speziellen Produktdaten von dem Datenträger der Zusatzmodule durch die Aufnahmevorrichtung und anschließender Weiterleitung der Produktdaten an das Schweißgerät bzw. an die Schweißstromquelle ein selbständiges Einstellen des Schweißgerätes bzw. der Schweißstromquelle durchgeführt wird, sodaß Bedienungsfehler, wie dies beispielsweise beim Einstellen eines Durchmessers eines Schweißdrahtes entstehen kann, verhindert wird. Ein weiterer Vorteil liegt darin, daß beispielsweise bei Verwendung spezieller Gasflaschen Gefahrenhinweise auf den Datenträger gespeichert werden können, die anschließend am Display des Schweißgerätes bzw. der Schweißstromquelle angezeigt und/oder audiomäßig wiedergegeben werden, sodaß ein Hinweis für den Benutzer über die spezielle Anwendung bzw. die Gefahren dieser Gasflasche ersichtlich ist.

Ein weiterer Vorteil liegt darin, daß dadurch ein einfaches Ablesen der Daten von den Datenträgern möglich ist.

Von Vorteil ist aber auch eine Ausbildung nach Anspruch 2, da dadurch ein einfacher Datenaustausch zwischen den Zusatzmodulen und der Steuervorrichtung des Schweißgerätes bzw. der Schweißstromquelle möglich ist.

Es ist aber auch eine Ausgestaltung nach Anspruch 3 möglich, da dadurch für die Einstellung der Schweißstromquelle zum Stand der Technik zählende Komponenten eingesetzt werden können, wodurch die Kosten für ein derartiges System redu- ziert werden können.

Von Vorteil ist aber auch eine Ausgestaltung nach Anspruch 4, da dadurch eine einwandfreie Datenübertragung zwischen der Aufnahmevorrichtung und der Steuervorrichtung der Schweißstromquelle möglich ist.

Eine weitere vorteilhafte Ausbildung ist im Anspruch 5 beschrieben, da dadurch eine hohe Flexibilität für die Datenaufnahme von der Aufnahmevorrichtung erreicht wird.

Von Vorteil ist aber auch eine Ausbildung nach Anspruch 6, da dadurch die Zusatzinformationen für die Systemverarbeitung herangezogen werden können, sodaß in einfacher Form ein Protokoll für einen durchgeführten Schweißprozeß von dem Schweißgerät oder von einem mit dem Schweißgerät verbundenen Personal Computer erstellt werden kann.

Vorteilhaft ist auch eine Ausgestaltung nach den Ansprüchen 7 und 8, da dadurch der Datenträger für die Zusatzmodule möglichst klein gehalten werden kann.

Schließlich ist auch eine Ausbildung nach den Ansprüchen 9 und 10 von Vorteil, da dadurch eine Feinabstimmung für den Schweißprozeß durchgeführt werden kann.

Die Erfindung wird im nachfolgenden anhand der in den Zeichnungen dargestellten Ausführungsbeispiele näher erläutert.

Es zeigen:

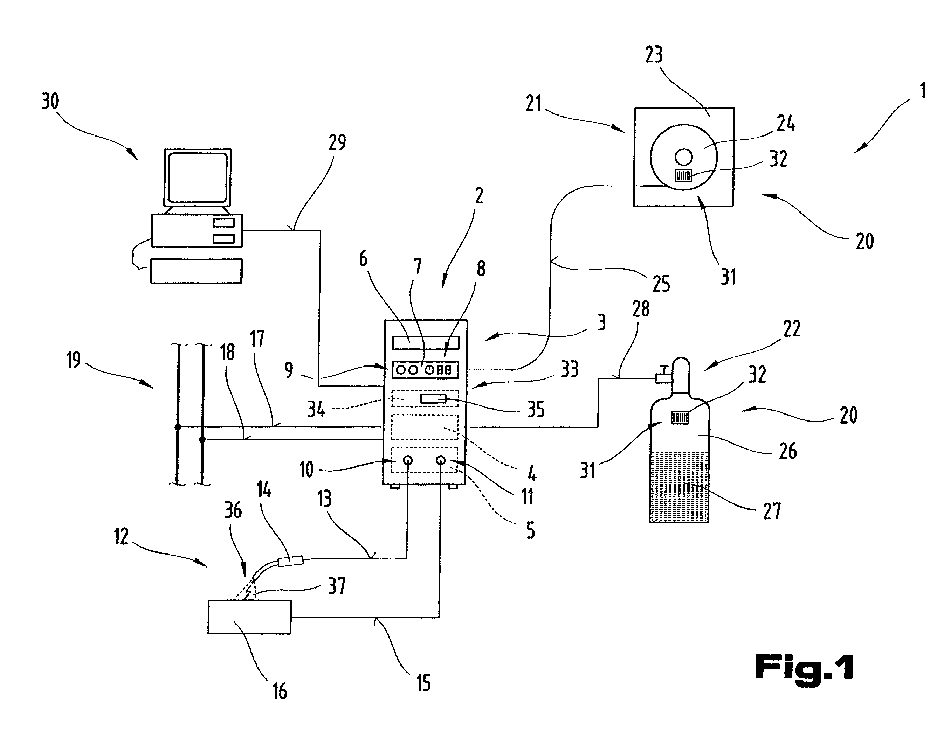

- Fig. 1: eine schematische Darstellung eines erfindungsgemäßen Schweißsystems, in vereinfachter und schematischer Darstellung;
- Fig. 2: ein Blockschaltbild einer weiteren Ausführungsform des erfindungsgemäßen Schweißsystems, in vereinfachter und schematischer Darstellung.

In Fig. list ein Schweißsystem 1 für ein Schweißgerät 2 bzw. einer Schweißstromquelle oder ein Schneidgerät gezeigt. Das Schweißgerät 2 beinhaltet dabei eine Ein- und/oder Ausgabevorrichtung 3, eine Steuervorrichtung 4 und eine Stromquelle 5.

Die Ein- und/oder Ausgabevorrichtung 3 setzt sich aus einer Anzeigevorrichtung 6 - beispielsweise einem Display und einer Eingabevorrichtung 7, die beispielsweise aus einzelnen Schaltern 8 und Potentiometern 9 zum Einstellen der Schweißparameter gebildet wird - zusammen. Durch die Eingabevorrichtung 7 kann der Benutzer das Schweißgerät 2 auf einen entsprechenden Schweißprozeß abstimmen, d.h., daß der Bediener über die Schalter 8 beispielsweise unterschiedliche Schweißverfahren auswählen kann, wobei der Benutzer über die Potentiometer 9 diverse Schweißparameter - wie Drahtdurchmesser, Schweißstrom usw. - einstellen kann. Die vom Benutzer eingestellten Schweißparameter werden an der Anzeigevorrichtung 6 angezeigt, sodaß eine ständige Kontrolle vom Benutzer durchgeführt werden kann. Weiters ist es möglich, daß beispielsweise ein Schalter 8 angeordnet ist, bei dem bereits für die verschiedensten Schweißprozesse die verschiedensten Schweißparameter hinterlegt sind, d. h., daß durch die Einstellung eines Schweißverfahrens mit diesem Schalter 8 bereits der Drahtdurchmesser bzw. der Schweißstrom selbständig von der Steuervorrichtung 4 vorgegeben wird.

Die Steuervorrichtung 4 hat die Aufgabe, die von dem Benutzer an der Ein- und/oder Ausgabevorrichtung 3 eingestellten Schweißparameter entsprechend an die Stromquelle 5 weiter zu leiten. Die Stromquelle 5 weist dabei zwei Ausgänge 10, 11 für einen Verbraucher 12 auf. An dem Ausgang 10 wird über eine Versorgungsleitung 13 ein Schweißbrenner 14 angeschlossen, wogegen am Ausgang 11 über eine Versorgungsleitung 15 ein Werkstück 16 angeschlossen wird.

Das Schweißgerät 2 ist weiters über Zuleitungen 17, 18 mit einem Spannungsversorgungsnetz 19 verbunden. Selbstverständlich ist es möglich, daß das Schweißgerät 2 sowohl an ein Zweiphasen-Spannungsversorgungsnetz als auch an ein Dreiphasen-Spannungsversorgungsnetz angeschlossen werden kann.

Damit ein Benutzer des Schweißgerätes 2 einen Schweißprozeß mit dem Schweißbrenner 14 durchführen kann, können noch zusätzliche Zusatzmodule 20 mit dem Schweißgerät 2 bzw. mit dem Schweißbrenner 14 verbunden werden. Die Zusatzmodule 20 können dabei beispielsweise durch eine Drahtzufuhrvorrichtung 21 und eine Gasversorgungsvorrichtung 22 gebildet werden.

Die Drahtzufuhrvorrichtung 21 kann beispielsweise aus einem Abwicklungsgerät 23 und einer Drahtrolle 24 gebildet werden. Von der Drahtzufuhrvorrichtung 21 wird ein von der Drahtrolle 24 aufgewickelter Schweißdraht 25 über das Schweißgerät 2 und der Versorgungsleitung 13 an den Schweißbrenner 14 geführt. D.h., daß der Benutzer des Schweißgerätes 2 einen Schweißprozeß mit einer abschmelzbaren Elektrode - also dem Schweißdraht 25 - durchführen kann. Selbstverständlich ist es möglich, daß anstelle der Drahtzufuhrvorrichtung 21 eine nichtabschmelzbare Elektrode am Schweißbrenner 14 angeordnet sein kann, wodurch jedoch der Benutzer für den Schweißprozeß zusätzlich einen Schweißdraht 25 von Hand zuführen muß.

Die Gasversorgungsvorrichtung 22 kann beispielsweise durch eine Gasflasche 26 gebildet werden. Selbstverständlich ist es hier möglich, daß anstelle der Gasflasche 26 ein hausinternes Gasversorgungsnetz verwendet werden kann. Die Zuführung des in der Gasflasche befindlichen Gases 27 erfolgt zum Schweißgerät 2 über eine Gasleitung 28, wobei vom Schweißgerät 2 zum Schweißbrenner 14 das Gas 27 über die Versorgungsleitung 13 zugeführt werden kann. Selbstverständlich ist es möglich, daß die Zuführung der einzelnen Komponenten der Zusatzmodule 20 zum Schweißbrenner 14 über separate Leitungen erfolgen kann.

Weiters ist es möglich, daß das Schweißgerät 2, insbesondere die Steuervorrichtung 4, eine externe Schnittstelle aufweist, mit der das Schweißgerät 2 über eine Datenleitung 29 mit einem Personal Computer 30 verbunden werden kann.

Damit nunmehr der Benutzer des Schweißgerätes 2 einen Schweißprozeß durchführen kann, muß das Schweißgerät 2 für den entsprechenden Schweißprozeß eingestellt werden. Dazu sind an den einzelnen Zusatzmodulen 20, also an der Drahtrolle 24 der Drahtzufuhrvorrichtung 21 sowie an der Gasflasche 26 der Gasversorgungsvorrichtung 22, zumindest ein Datenträger 31 angeordnet. Der Datenträger 31 kann dabei beispielsweise durch eine Etikette 32, insbesondere durch eine Bar-Code-Etikette gebildet werden. Die Datenträger 31 der einzelnen Zusatzmodule 20 weisen dabei Daten für das entsprechende Zusatzmodul 20 auf, d.h., daß beispielsweise bei der Drahtrolle 24 der Drahtzufuhrvorrichtung 21 der Datenträger 31 spezielle Daten über die Legierung bzw. die Zusammensetzung des Schweißdrahtes 25 sowie der Schweißdrahtlänge und dem Drahtdurchmesser beinhaltet, wogegen beispielsweise der Datenträger 31 für die Gaszufuhrvorrichtung 22 spezielle Daten für die Zusammensetzung des Gases 27 aufweist.

Der Benutzer kann dabei die Daten der Datenträger 31 der einzelnen Zusatzmodule 20 über eine in dem Schweißgerät 2 angeordnete Aufnahmevorrichtung 33 von den Datenträgern 31 der Zusatzmodule 20 ablesen. Dazu ist die Aufnahmevorrichtung 33 durch ein im Schweißgerät 2 angeordnetes Grundmodul 34 und ein über ein Verbindungskabel bzw. schnurlos angeordnetes Schreib- und/oder Lesegerät 35 für den Bar-Code der Etikette 32 versehen. Der Benutzer kann mit dem Schreib- und/oder Lesegerät 35, das über ein Verbindungskabel mit dem Grundmodul 34 verbunden ist, die Daten der Etikette 32 der Datenträger 31 ablesen, d.h., daß das Schreib- und/oder Lesegerät 35 in Form eines Barcode-Scanners ausgebildet ist, sodaß die durch den Bar-Code beinhalteten Daten vom Schreib- und/oder Lesegerät 35 erfaßt werden und anschließend von dem Grundmodul 34 umgesetzt werden. Nachdem das Grundmodul 34 die Daten der Datenträger 31 in eine für die Steuervorrichtung 4 entsprechende Form umgewandelt hat, übergibt das Grundmodul 34 die Daten an die Steuervorrichtung 4, wodurch eine Steuerung bzw. Einstellung des Schweißgerätes 2 auf die entsprechenden Zusatzmodule 20 erfolgt. Dabei ist es möglich, daß das Schreib- und/oder Lesegerät 35 kabellos ausgebildet ist, wobei beim Verbinden des Schreib- und/oder Lesegerätes 35 mit dem Schweißgerät 2 die Daten vom Schreib- und/oder Lesegerät 35 an die Steuervorrichtung 4 übergeben werden.

Gleichzeitig werden von der Steuervorrichtung 4 die gelesenen Daten der Datenträger 31 an der Anzeigevorrichtung 6 angezeigt, sodaß der Benutzer überprüfen kann, ob ein Lesefehler beim Ablesen des an der Etikette 32 angeordneten Bar-Codes entstanden ist. Selbstverständlich ist es möglich, daß der Benutzer die eingegebenen Daten von den Datenträgern 31 durch die Eingabevorrichtung 7 noch verändern kann, sodaß eine Feinabstimmung des Benutzers für den von ihm gewählten Schweißprozeß durchgeführt werden kann. Weiters ist es möglich, daß zu den einzelnen Daten, die über das Schreib- und/oder Lesegerät 35 erfaßt werden, noch zusätzliche, fehlende Daten -vom Benutzer über die Eingabevorrichtung 7, wie beispielsweise der gewünschte Schweißstrom, eingestellt werden können. Es ist jedoch auch möglich, daß nur spezielle Daten vom Benutzer über die Eingabevorrichtung 7 verändert werden können. Dies ist deshalb von Vorteil, da dadurch spezielle Daten der Zusatzkomponenten nicht verändert werden können, wodurch Fehler für einen Schweißprozeß ausgeschlossen werden können. Die Zuordnung, ob die entsprechenden Daten von den einzelnen Datenträgern 31 über die Eingabevorrichtung 7 verändert werden können, kann dabei durch eine spezielle Codierung auf dem Datenträger 31 oder über ein Softwareprogramm am Schweißgerät 2 festgelegt werden.

Nachdem der Benutzer sämtliche an den Zusatzmodulen 20 angebrachten Datenträger 31 durch das Schreib- und/oder Lesegerät 35 erfaßt hat und die restlichen noch fehlenden Schweißparameter für den Schweißprozeß über die Eingabevorrichtung 7 eingestellt hat, kann ein einwandfreier Schweißprozeß mit dem Schweißbrenner 14 durchgeführt werden.

Vorteilhaft ist bei dieser Art der Einstellung des Schweißgerätes 2, daß Fehler bei der Einstellung über die Eingabevorrichtung 7 vermieden werden, da eine selbständige Anpassung des Schweißgerätes 2 an die einzelnen Zusatzmodule 20 erfolgt.

Weiters ist es möglich, daß spezielle Prüfprogramme in der Steuervorrichtung 4 ablaufen, sodaß beispielsweise bei der Anordnung zweier nicht kompatibler Zusatzmodule 20, beispielsweise eines speziellen Gases 27 mit einem speziellen Schweißdraht 25, ein Warnsignal von der Steuervorrichtung 4 ausgesandt werden kann, wodurch der Benutzer aufmerksam gemacht wird, daß ein Schweißprozeß mit diesen beiden Komponenten nicht möglich ist.

Durch die Anordnung der Datenträger 31 an den einzelnen Zusatzmodulen 20 ist es möglich, daß zusätzliche Informationen, wie beispielsweise die Länge des Schweißdrahtes 25 auf der Drahtrolle 24 sowie spezielle Schutzvorrichtungen des Gases 27, an der Anzeigevorrichtung 6 angezeigt werden bzw. daß durch entsprechende Software der Verbrauch der einzelnen Komponenten der Zusatzmodule 20 durch die Steuervorrichtung 4 errechnet werden kann. Vorteilhaft ist dabei, daß der Benutzer jederzeit erkennen kann, wieviel Schweißdraht 25 sich noch auf der Drahtrolle 24 befindet bzw. welche Füllmenge die Gasflasche 26 aufweist, damit bei einem neuerlichen Schweißprozeß dieser nicht unterbrochen werden muß, um ein Zusatzmodule 20 auszutauschen.

Es ist auch möglich, daß für die einzelnen Komponenten des Schweißsystems 1, wie z.B. für den Schweißbrenner 14 sowie für das Werkstück 16, der Benutzer eine spezielle Etikette 32 aufbringen kann, und somit eine Einstellung auf das Material des Werkstückes 16 sowie die Art des Schweißbrenners 14 automatisch durchgeführt werden kann.

Bei einem derartigen Schweißsystem 1ist es auch möglich, daß durch die Verbindung des Schweißgerätes 2 über die Datenleitung 29 mit einem Personal Computer 30 spezielle Auswertungen am Personal Computer 30 durchgeführt werden können. Dabei werden sämtliche Daten, die während eines Schweißprozesses auftreten, bzw. der Verbrauch der einzelnen Zusatzmodule 20 über die Datenleitung 29 an den Personal Computer 30 übergeben, wodurch dieser über spezielle Software die unterschiedlichsten Auswertungen, wie Verbrauch des Schweißdrahtes 25 bzw. die sichere Zündung eines zwischen dem am Schweißbrenner 14 zugeführten Schweißdraht 25 und dem Werkstück 16 aufgebauten Lichtbogens 36 in einer Schutzgasatmosphäre 37 bzw. das Auftreten eines Kurzschlusses zwischen dem Schweißdraht 25 und dem Werkstück 16, vorgenommen werden können. Das Aufbringen der Datenträger an die einzelnen Zusatzmodule 20 kann durch einfaches Aufdrucken auf die Zusatzmodule 20 bzw. durch speziell ausgebildete Aufkleber erfolgen.

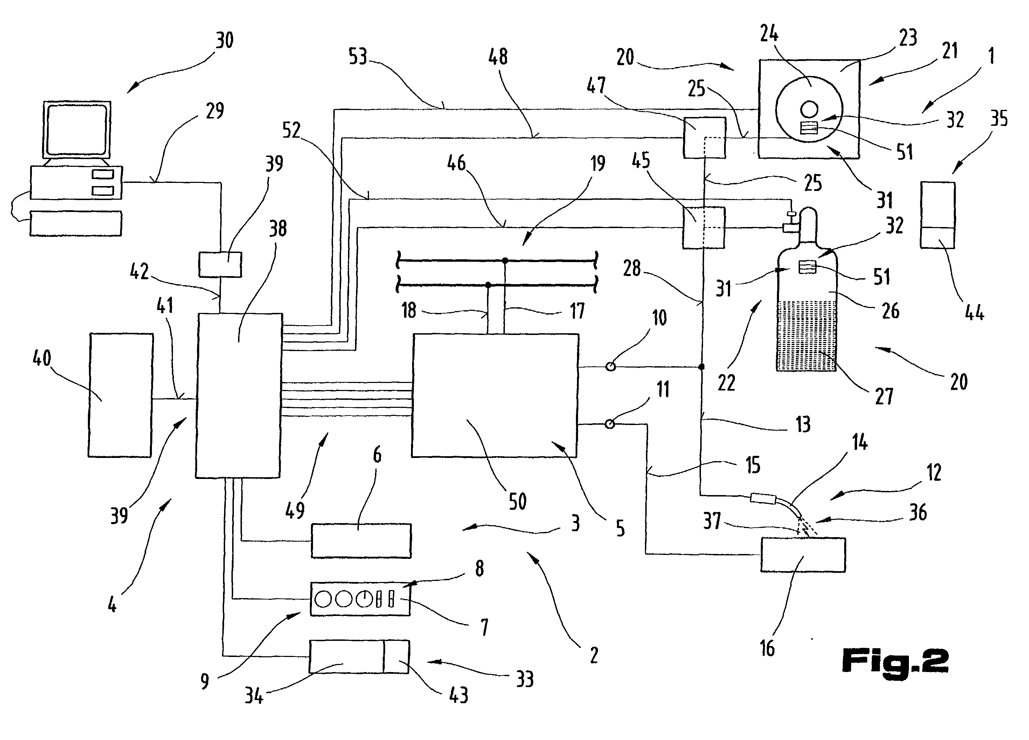

In Fig. 2 ist ein weiteres Ausführungsbeispiel des Schweißsystems 1 gezeigt. Bei diesem Ausführungsbeispiel ist ein Blockschaltbild des Schweißgerätes 2 gezeigt, wobei für dieselben Teile der zuvor beschriebenen Figuren dieselben Bezugszeichen verwendet werden.

Die Steuervorrichtung 4 wird beispielsweise durch eine Mikroprozessorsteuerung 38, an der eine Schnittstelle 39 und eine Speichervorrichtung, insbesondere ein Speicher 40, über Datenleitungen 41, 42 angeordnet sind, gebildet. Weiters werden die Komponenten der Ein- und/oder Ausgabevorrichtung 3, insbesondere der Anzeigevorrichtung 6, und der Eingabevorrichtung 7 sowie die das Grundmodul 34 der Aufnahmevorrichtung 33 mit der Mikroprozessorsteuerung 38 verbunden. Die Aufnahmevorrichtung 33 wird wiederum aus dem Grundmodul 34 und dem Schreib- und oder Lesegerät 35 gebildet, wobei nunmehr das Schreib- und/oder Lesegerät 35 sowie das Grundmodul 34 mit einer Sende- und/oder Empfangsvorrichtung 43, 44 ausgestattet sind, sodaß sich der Benutzer des Schweißgerätes 2 mit dem Schreib- und/oder Lesegerät 35 frei bewegen kann und die Daten der an dem Zusatzmodul 20 angeordneten Datenträger 31 mit dem Schreib- und/oder Lesegerät 35 ablesen kann. Weiters ist mit der Mikroprozessorsteuerung 38 ein Durchflußmesser 45 für die Gasversorgungsvorrichtung 22 über eine Leitung 46 verbunden, wodurch von der Mikroprozessorsteuerung 38 der Verbrauch des Gases 27 bei einem Schweißprozeß erfaßt werden kann. Weiters weist das Schweißgerät 2 einen Wegmeßfühler 47 für den Schweißdraht 25 auf. Der Wegmeßfühler 47 ist über eine Leitung 48 mit der Mikroprozessorsteuerung 38 verbunden.

Die Steuervorrichtung 4, insbesondere die Mikroprozessorsteuerung 38, ist zumindest über eine oder mehrere Steuerleitung 49 mit der Stromquelle 5, insbesondere mit einer Inverterstromquelle 50, verbunden. Die Inverterstromquelle 50 ist über die Zuleitungen 17, 18 mit dem Spannungsversorgungsnetz 19 verbunden, sodaß für einen Schweißprozeß der Schweißbrenner 14 sowie die restlichen Komponenten des Schweißgerätes 2 von der Stromquelle 5 mit Strom und Spannung versorgt werden können. An der Stromquelle 5 sind die Ausgänge 10, 11 für den Schweißbrenner 14 und das Werkstück 16 angeordnet, wobei wiederum der Schweißbrenner 14 und das Werkstück 16 über die Versorgungsleitungen 13, 15 mit der Stromquelle 5 verbunden sind.

Weiters ist es möglich, daß der Personal Computer 30 bei Bedarf über die Datenleitung 29 mit der Schnittstelle 39 der Mikroprozessorsteuerung 38 verbunden wird, sodaß die in der Steuervorrichtung 4 gespeicherten Daten über die Schnittstelle 39 an den Personal Computer 30 weitergeleitet werden bzw. daß von dem Personal Computer 30 Daten über die Datenleitung 29 an den Mikroprozessor 38 übergeben werden.

Bei dem dargestelltem Schweißsystem 1 sind wiederum auf den einzelnen Zusatzmodulen 20, insbesondere auf der Drahtzufuhrvorrichtung 21 und der Gasversorgungsvorrichtung 22, die Etiketten 32 angeordnet. Bei diesem Ausführungsbeispiel weisen die Etiketten 32 einen Magnetstreifen 51 auf, sodaß das Schreib- und/oder Lesegerät 35 zum Lesen von Magnetstreifen bzw. zum Beschreiben von Magnetstreifen ausgebildet sein muß.

Wird vom Benutzer das Schweißgerät 2 in Betrieb genommen, d.h., daß die Stromquelle 5 mit dem Spannungsversorgungsnetz 19 verbunden wird, so wird von der Mikroprozessorsteuerung 38 eine in dem Speicher 40 hinterlegte Grundeinstellung für das Schweißgerät 2 in seinem Hauptspeicher geladen, sodaß, wenn gewünscht, der Benutzer mit dieser Einstellung über den Schweißbrenner 14 einen Schweißprozeß durchführen kann. Selbstverständlich ist es möglich, daß bei der Inbetriebnahme des Schweißgerätes 2 immer der zuletzt eingestellte Schweißprozeß in den Hauptspeicher der Mikroprozessorsteuerung 38 geladen wird, sodaß bei Beendigung eines Arbeitsvorganges bzw. beim kurzzeitigen Abschalten des Schweißgerätes 2, z.B. damit der Benutzer ein Zusatzmodul 20 austauschen kann, anschließend, ohne irgendwelche Einstellungen vornehmen zu müssen, mit dem Schweißprozeß fortfahren kann. Die Steuerung für einen Schweißprozeß erfolgt dabei so, daß die Mikroprozessorsteuerung 38 die Stromquelle 5 über die Steuerleitung 49 derart ansteuert, daß diese an den Ausgängen 10, 11 der Stromquelle 5 den gewünschten Strom bzw. die Spannung an den Schweißbrenner 14 anlegt, sodaß vom Benutzer ein Schweißprozeß mit den entsprechenden Schweißparametern durchgeführt werden kann. Die Mikroprozessorsteuerung 38 steuert gleichzeitig die Zusatzmodule 20 an.

Um nunmehr das Schweißgerät 2 für einen neuen Schweißprozeß einzustellen, kann der Benutzer über das Schreib- und/oder Lesegerät 35 die Daten der einzelnen Zusatzmodule 20 von den Etiketten 32 aufnehmen. Die Daten werden anschließend im Schreib- und/oder Lesegerät 35 zwischengespeichert und über die Sende- und/oder Empfangsvorrichtung 44 an das Grundmodul 34 übersandt. Vorteilhaft ist bei der drahtlosen Übertragung der Daten, daß der Benutzer mit dem Schreib- und/oder Lesegerät 35 nicht auf einen gewissen Bereich um das Schweißgerät 2 gebunden ist, sondern, daß dieser einen höheren Funktionsradius zum Ablesen der Daten von den Etiketten 32 zur Verfügung hat.

Selbstverständlich ist es möglich, jede Art eines Schreib- und/oder Lesegerätes 35, wie z.B. für Chipkarte, Bar-Code usw., einzusetzen. Dazu muß das Grundmodul 34 auf das vom Benutzer verwendete Schreib- und/oder Lesegerät 35 angepaßt werden. Das Anpassen des Grundmodules 34 für das entsprechende Schreib- und/oder Lesegerät 35 kann in Form einer Modulbauweise durchgeführt werden. Dabei wird das Gundmodul 34 einfach aus dem Schweißgerät 2 herausgezogen und durch ein entsprechendes Grundmodul 34 für das entsprechende Schreib- und/oder Lesegerät 35 für die Etiketten 32 in das Schweißgerät 2 hineingesteckt, wobei eine selbständige Kontaktierung des Grundmodules 34 mit der Hardware des Schweißgerätes 2 erfolgt. Das Grundmodul 34 wird dabei so ausgebildet, daß für die verschiedensten Etiketten 32 beim Ablesen der Daten diese von dem Grundmodul 34 für die Mikroprozessorsteuerung 38 umgewandelt werden. Vorteilhaft ist dabei, daß ein einfacher Austausch und eine rasche Anpassung an die verschiedensten Etiketten 32 durchgeführt werden kann, ohne daß dabei zusätzliche Programmierarbeiten durchgeführt werden müssen.

Es ist auch möglich, daß das Schreib- und/oder Lesegerät 35 einen internen Speicher aufweist, sodaß der Benutzer nach Ablesen aller Daten von dem Zusatzmodul 20 mit dem Schreib- und/oder Lesegerät 35 zum Schweißgerät 2 geht und diese durch Verbinden des Schreib- und/oder Lesegerätes 35 mit der Schnittstelle 39 an die Steuervorrichtung 4 bzw. an das Grundmodul 34 übergibt.

Weiters ist es möglich, daß ein sogenanntes Transpondersystem für dieses Schweißsystem 1 eingesetzt werden kann. Dazu werden an den einzelnen Zusatzmodulen 20 die Transponder angebracht, die anschließend durch Aktivieren des Grundmodules 34 vom Schweißgerät 2 selbständig erfaßt werden. Vorteilhaft ist bei einem derartigen System, daß der Benutzer kein Schreib- und/oder Lesegerät 35 benötigt, da durch das Grundmodul 34 eine entsprechende Frequenz ausgesandt wird, die die Transponder an den Zusatzmodulen 20 aktiviert und einen entsprechenden Code bzw. die Daten, die im Transponder hinterlegt sind, an das Grundmodul 34 übersenden, sodaß eine automatische Einstellung des Schweißgerätes 2 gewährleistet ist.

Nachdem sämtliche Daten von dem Schreib- und/oder Lesegerät 35 an das Grundmodul 34 übersandt wurden, werden vom Grundmodul 34 die Daten der Etiketten 32 derart umgewandelt, daß diese die Mikroprozessorsteuerung 38 lesen kann. Dabei ist es z.B. möglich, daß die Daten der Etiketten 32 durch unterschiedliche Zuordnungsnummern gebildet werden. Bei einem derartigen System werden von dem Grundmodul 34 einzelne Zuordnungsnummern an die Mikroprozessorsteuerung 38 übergeben. Diese speichert die einzelnen Zuordnungsnummern in ihrem Hauptspeicher ab, sodaß anschließend die Mikroprozessorsteuerung 38 die einzelnen Zuordnungsnummern abarbeiten kann. Die Zuordnungsnummern entsprechen dabei Adressen für den Speicherplatz im Speicher 40, sodaß von der Mikroprozessorsteuerung 38 die Daten, die in diesem Adressbereich im Speicher 40 hinterlegt werden, vom Speicher 40 über die Datenleitung 41 ausgelesen werden. Nachdem die Mikroprozessorsteuerung 38 alle Zuordnungsnummern abgearbeitet hat, d.h., daß alle Daten, die für die entsprechenden Zuordnungsnummern für die Mikroprozessorsteuerung 38 vom Speicher 40 herausgeladen wurden, kann die Mikroprozessorsteuerung 38 die Stromquelle 5 mit der daraus berechneten Einstellung für das Schweißgerät 2 ansteuern. Dazu ist es jedoch möglich, daß der Benutzer wiederum über die Eingabevorrichtung 7, insbesondere mit an diesen angeordneten Schaltern 8 und Potentiometern 9 die fehlenden Daten für einen Schweißprozeß z.B. den Schweißstrom noch zusätzlich einstellen kann bzw. daß die vorgegebenen Daten, die an der Anzeigevorrichtung 6 angezeigt werden, vom Benutzer noch korrigiert werden.

Durch das Speichern der Daten für die Zusatzmodule 20 im Speicher 40 kann nunmehr der Benutzer über die Eingabevorrichtung 7 auf diese Daten im Speicher 40 zugreifen, d.h., daß der Benutzer spezielle Informationen, die während des Schweißprozesses auftreten bzw. vor dem Schweißprozeß über die Eingabevorrichtung 7 in dem Speicher 40 verändern bzw. Zusatzinformationen in den Speicher 40 hinzufügen. Dies hat den Vorteil, daß dadurch bei Auftreten eines Schweißproblemes bei einer bestimmten Einstellung jeder Benutzer dieses Schweißgerätes 2 diese Daten zur Verfügung hat. Weiters ist es auch möglich, daß nach jedem Schweißprozeß die in der Mikroprozessorsteuerung 38 gespeicherten Daten über die Schnittstelle 39 an den Personal Computer 30 weitergeleitet werden bzw. daß in bestimmten Zeitabständen eine Datenübertragung zwischen der Mikroprozessorsteuerung 38 und dem Personal Computer 30 durchgeführt wird.

Nachdem das Schweißgerät 2 durch das Schreib- und/oder Lesegerät 35 voreingestellt wurde und eine Feinabstimmung vom Benutzer über die Eingabevorrichtung 7 vorgenommen wurde, kann nun der Benutzer mit dem Schweißprozeß beginnen. Dazu wird z.B. durch Berühren des Schweißdrahtes 25 vom Schweißbrenner 14 mit dem Werkstück 16 der Lichtbogen 36 gezündet. Gleichzeitig wird von der Mikroprozessorsteuerung 38 über eine Steuerleitung 52 die Gasversorgungsvorrichtung 22 angesteuert, d.h., daß z.B. ein an der Gasversorgungsvorrichtung angeordnetes Ventil über die Steuerleitung 52 aktiviert wird, sodaß am Schweißbrenner 14 die Schutzgasatmosphäre 37 erzeugt wird. Nachdem der Lichtbogen 36 am Schweißbrenner 14 gezündet wurde, steuert die Mikroprozessorsteuerung 38 über eine Steuerleitung 53 das Abwicklungsgerät 23 der Drahtzufuhrvorrichtung 21 an. Dabei erfolgt die Ansteuerung des Abwicklungsgerätes 23 so, daß entsprechend der über die Steuerleitung 53 gelieferten Spannung eine bestimmte Drahtvorschubgeschwindigkeit vorgegeben wird. Durch die Anordnung des Durchflußmessers 45 und des Wegmeßfühlers 47 kann nun die Mikroprozessorsteuerung 38 jederzeit den Verbrauch der Komponenten der Zusatzmodule 20 ermitteln und diese an der Anzeigevorrichtung 6 anzeigen. Dies ist deshalb von Vorteil, da der Benutzer jederzeit ermitteln kann, wieviel Gas 27 sich noch in der Gasflasche 26 bzw. welche Schweißdrahtlänge sich noch auf der Drahtrolle 24 befindet. Die Daten, die über den Durchflußmesser 45 und den Wegmeßfühler 47 ermittelt werden, werden in der Mikroprozessorsteuerung 38 zwischengespeichert bzw. werden direkt im Speicher 40 hinterlegt. Selbstverständlich ist es möglich, daß bei einer Verbindung der Mikroprozessorsteuerung 38 mit dem Personal-Computer 30 die Daten direkt über die Schnittstelle 39 an den Personal-Computer 30 weitergeleitet werden, wodurch diese anschließend die Auswertung für den Verbrauch der Komponenten der Zusatzmodule 20 durchführen kann.

Bei einem derartigen Schweißsystem 1, bei dem auf die Etiketten 32 eine Zuordnungsnummer für eine Speicheradresse im Schweißgerät 2 hinterlegt ist, ist es von Vorteil, daß beim Beenden des Schweißprozesses die Restmenge der Zusatzmodule 20, also beispielsweise die Drahtlänge an der Drahtrolle 34 bzw. die Füllmenge der Gasflasche 26, auf die Etiketten 32 zurückgeschrieben werden. Da bei einem Austausch einer oder beider Komponenten der Zusatzmodule 20 und bei Wiederverwendung dieser Zusatzmodule 20 die Füllmenge bzw. die Drahtlänge zusätzlich zu der Zuordnungsnummer an das Schweißgerät 2 übergeben werden kann. Selbstverständlich ist es möglich, daß an Stelle des Zurückschreibens der verbrauchten Komponenten diese in den Personal Computer 30 hinterlegt werden, wodurch bei einem neuerlichen Schweißprozeß mit diesen Komponenten das Schweißgerät 2 über die Schnittstelle 39 die Daten vom Personal Computer 30 abrufen kann, bzw. daß beim Verbinden eines anderen Schweißgerätes 2 mit dem Personal Computer 30 die Daten vom Personal Computer 30 automatisch an das Schweißgerät 2 bei Aufruf einer entsprechenden Zuordnungsnummer übertragen werden.

Beendet nunmehr der Benutzer den Schweißprozeß, so ist es möglich, daß z.B. von der Steuervorrichtung 4 ein Warnsignal bzw. ein Blinksignal ausgesandt wird, mit dem der Benutzer aufgefordert wird, daß nunmehr die in der Mikroprozessorsteuerung 38 gespeicherten Daten auf die Etiketten 32 der einzelnen Zusatzmodule 20 zurückgespeichert werden. Dazu werden von der Mikroprozessorsteuerung 38 diese Daten an das Grundmodul 34 übergeben.

Um die Daten vom Grundmodul 34 an das entsprechende Zusatzmodul 20 zu übertragen, muß der Benutzer zuerst die Zuordnungsnummer eines entsprechenden Zusatzmodules 20 über das Schreib- und/oder Lesegerät 35 von der Etikette 32 abfragen.

Das Schreib- und/oder Lesegerät 35 sendet diese wiederum über die Sende- und/oder Empfangsvorrichtung 44 an das Grundmodul 34. Das Grundmodul 34 vergleicht anschließend die Zuordnungsnummern, sodaß das Grundmodul 34 die von der Mikroprozessorsteuerung 38 übergebenen Daten für dieses Zusatzmodul 20 über die Sende- und/oder Empfangsvorrichtung 43 an das Schreib- und/oder Lesegerät 35 übersenden kann, die anschließend auf dem Magnetstreifen 51 des Zusatzmoduls 20 abgespeichert werden kann. Diese Vorgehensweise ist deshalb von Vorteil, da dadurch der Verbrauch bzw. der restliche Inhalt der einzelnen Zusatzmodule 20 hinterlegt werden, sodaß bei Austausch der Zusatzmodule 20, z.B. bei einer halbleeren Füllmenge der Gasflasche 26, ein weiterer Benutzer eines anderen Schweißgerätes 2 diese Gasflasche 26 verwenden kann und durch Ablesen des Datenträgers 31 die Füllmenge dieses Zusatzmoduls 20 ermitteln kann.

Selbstverständlich ist es möglich, daß dieses Verfahren für elektrische Handschweißgeräte oder Schneidsysteme sowie ähnliche Systeme angewandt werden kann.

Abschließend sei der Ordnung halber darauf hingewiesen, daß in den Zeichnungen einzelne Bauteile und Baugruppen zum besseren Verständnis der Erfindung unproportional und maßstäblich verzerrt dargestellt sind.

Desweiteren wird darauf hingewiesen, daß es sich bei den dargestellten Schaltbildern um schematisch vereinfachte Blockschaltbilder handelt, in welchen einzelne Schaltungsdetails nicht dargestellt sind.

### Bezugszeichenaufstellung

- 1: Schweißsystem
- 2: Schweißgerät
- 3: Ein- und/oder Ausgabevorrichtung
- 4: Steuervorrichtung
- 5: Stromquelle

- 6: Anzeigevorrichtung
- 7: Eingabevorrichtung
- 8: Schalter
- 9: Potentiometer
- 10: Ausgang

- 11: Ausgang
- 12: Verbraucher
- 13: Versorgungsleitung
- 14: Schweißbrenner
- 15: Versorgungsleitung

- 16: Werkstück
- 17: Zuleitung
- 18: Zuleitung
- 19: Spannungsversorgungsnetz
- 20: Zusatzmodul

- 21: Drahtzufuhrvorrichtung
- 22: Gasversorgungsvorrichtung
- 23: Abwicklungsgerät
- 24: Drahtrolle
- 25: Schweißdraht

- 26: Gasflasche
- 27: Gas
- 28: Gasleitung
- 29: Datenleitung
- 30: Personal Computer

- 31: Datenträger
- 32: Etikette
- 33: Aufnahmevorrichtung
- 34: Grundmodul
- 35: Schreib- und/oder Lesegerät

- 36: Lichtbogen
- 37: Schutzgasatmosphäre
- 38: Mikroprozessorsteuerung
- 39: Schnittstelle
- 40: Speicher

- 41: Datenleitung
- 42: Datenleitung
- 43: Sende- und/oder Empfangsvorrichtung
- 44: Sende- und/oder Empfangsvorrichtung
- 45: Durchflußmesser

- 46: Leitung
- 47: Wegmeßfühler
- 48: Leitung
- 49: Steuerleitung
- 50: Inverterstromquelle

- 51: Magnetstreifen
- 52: Steuerleitung
- 53: Steuerleitung

## Patentansprüche

1. Schweißsystem mit zumindest einer Schweißstromquelle und einem oder mehreren Zusatzmodulen, insbesondere einer Drahtzufuhrvorrichtung in einem Schweißbrenner und einer Gasversorgungsvorrichtung, wobei jedes Zusatzmodul (20), wie z.B. die Drahtzufuhrvorrichtung (21) und/oder die Gasversorgungsvorrichtung (22), einen Datenträger (31) mit den für das jeweilige Zusatzmodul (20) charakteristischen Daten zur Steuerung der Steuervorrichtung (4) des Schweißgerätes (2) in einem definierten Format aufweist, dadurch gekennzeichnet, daß der Datenträger (31) durch eine Etikette (32) gebildet ist, wobei zum Erfassen der Daten des Datenträgers (31) eine Aufnahmevorrichtung (33) vorgesehen ist, wobei die Aufnahmevorrichtung (33) und/oder ein Speicher der Aufnahmevorrichtung mit der Steuervorrichtung (4) des Schweißgerätes (2) leitungsverbunden oder drahtlos angeordnet ist, und die Aufnahmevorrichtung (33) durch ein Schreib- und/oder Lesegerät (35), z.B. für einen Bar-Code, einen Magnetstreifen, gebildet ist.

2. Schweißsystem nach einem oder mehreren der vorhergehenden Ansprüche, dadurch gekennzeichnet, daß die Aufnahmevorrichtung (33) und/oder der Speicher die Daten des Datenträgers (31) an die Steuervorrichtung (4) des Schweißgerätes (2) bzw. der Schweißstromquelle zum Festlegen der einzelnen Schweißparameter übergibt und/oder die Daten von der Steuervorrichtung (4) des Schweißgerätes (2) bzw. der Schweißstromquelle auf die einzelnen Datenträger (31) der einzelnen Zusatzmodule (2) schreibt bzw. speichert.

3. Schweißsystem nach Anspruch 1, dadurch gekennzeichnet, daß die Aufnahmevorrichtung (33) durch eine Sende- und/oder Empfangsvorrichtung (43, 44), z.B. für ein Transpondersystem, gebildet ist.

4. Schweißsystem nach einem oder mehreren der vorhergehenden Ansprüche, dadurch gekennzeichnet, daß die Aufnahmevorrichtung (33) mit der Steuervorrichtung (4) in der Schweißstromquelle verbunden und/oder angeordnet ist.

5. Schweißsystem nach einem oder mehreren der vorhergehenden Ansprüche 1 und 2, dadurch gekennzeichnet, daß die Aufnahmevorrichtung (33) über eine Leitungsverbindungsvorrichtung oder einer weiteren Sende- und/oder Empfangsvorrichtung (43, 44) zum Datenaustausch mit der Steuervorrichtung (4) der Schweißstromquelle verbunden ist.

6. Schweißsystem nach einem der vorhergehenden Ansprüche, dadurch gekennzeichnet, daß auf dem Datenträger Zusatzinformationen, wie beispielsweise die Länge des Schweißdrahtes (25), die Zusammensetzung des Schweißdrahtes (25) usw. hinterlegt sind.

7. Schweißsystem nach einem oder mehreren der vorhergehenden Ansprüche, dadurch gekennzeichnet, daß die Daten an den Datenträgern (31) durch Zuordnungsnummern, insbesondere durch Adressen, gebildet sind und daß in der Steuervorrichtung (4) eine Speichereinheit angeordnet ist, in der für die einzelnen Zuordnungsnummern die speziellen Daten für die Zusatzmodule (20) hinterlegt sind.

8. Schweißsystem nach einem oder mehreren der vorhergehenden Ansprüche, dadurch gekennzeichnet, daß in der Speichereinheit für den entsprechenden Datenträger (31), insbesondere dessen Zuordnungsnummern, zusätzliche Informationen, wie z.B. Schutzmaßnahmen für spezielle Gase (27) oder Drahtlegierungen, hinterlegt sind.

9. Schweißsystem nach einem oder mehreren der vorhergehenden Ansprüche, dadurch gekennzeichnet, daß die Schweißstromquelle eine Ein- und/oder Ausgabevorrichtung (3) aufweist, mit der Teile des die Daten bzw. der Informationen der Datenträger (31) nach der Übergabe von der Aufnahmevorrichtung (33) an die Steuervorrichtung (4) bearbeitbar und/oder nicht bearbeitbar sind.

10. Schweißsystem nach einem oder mehreren der vorhergehenden Ansprüche, dadurch gekennzeichnet, daß die Schweißparameter der Schweißstromquelle für einen Schweißprozeß durch die Daten der Datenträger (31) bzw. der in der Speichervorrichtung hinterlegten Daten bestimmt sind und daß zusätzliche Schweißparameter, z.B. der Schweißstrom, durch die Ein- und/oder Ausgabevorrichtung (3) festlegbar sind.

## Claims

1. Welding system having at least one welding current source and one or more add-on modules, in particular a wire feed system in a welding torch and a gas delivery device, wherein each add-on module (20), e.g. the wire feed system (21) and/or the gas delivery device (22) has a data medium (31) containing the characteristic data for the respective add-on module (20) to control the control device (4) of the welding device (2) in a defined format, characterised in that the data medium (31) is a label (32), a recording device (33) being provided to record the data of the data medium (31), wherein the recording device (33) and/or a memory of the recording device (33) is connected by a line or wirelessly to the control device (4) of the welding device (2) and the recording device (33) is a writing and/or reading device (35), e.g. for a bar code, a magnetic stripe.

2. Welding system as claimed in one or more of the preceding claims, characterised in that the recording device (33) and/or the memory transfers the data of the data medium (31) to the control device (4) of the welding device (2) or welding current source, in order to set the individual welding parameters, and/or writes or stores the data from the control device (4) of the welding device (2) or welding current source to and on the individual data media (31) of the individual add-on modules (2).

3. Welding system as claimed in claim 1, characterised in that the recording device (33) is a transmitter and/or receiver device (43, 44). e.g. for a transponder system.

4. Welding system as claimed in one or more of the preceding claims, characterised in that the recording device (33) is connected and/or assigned to the control device (4) in the welding current source.

5. Welding system as claimed in one or more of the preceding claims 1 and 2, characterised in that the recording device (33) is connected to the control device (4) of the welding current source via a line-connecting device or another transmitter and/or receiver device (43, 44) for exchanging data.

6. Welding system as claimed in one of the preceding claims, characterised in that additional information such as the length of the welding wire (25), the composition of the welding wire (25), etc., is stored on the data medium.

7. Welding system as claimed in one or more of the preceding claims, characterised in that the data is applied to the data media (31) by means of allocation numbers, in particular by addresses, and in that a memory unit is provided in the control device (4) in which the specific data for the individual allocation numbers for the add-on modules (20) is stored.

8. Welding system as claimed in one or more of the preceding claims, characterised in that additional information, e.g. precautions relating to specific gases (27) or wire alloys, are stored in the memory unit for the corresponding data media (31), in particular the allocation number thereof.

9. Welding system as claimed in one or more of the preceding claims, characterised in that the welding current source has an input and/or output device (3), by means of which parts of the data or the information of the data media (31) may be processed and/or may not be processed after transmission from the recording device (33) to the control device (4).

10. Welding system as claimed in one or more of the preceding claims, characterised in that the welding parameters of the welding current source are determined for a welding process by means of the data of the data medium (31) or the data stored in the memory device and in that additional welding parameters, e.g. the welding current, can be set by means of the input and/or output device (3).

## Revendications

1. Système de soudage avec au moins une source de courant de soudage et un ou plusieurs modules additionnels, notamment un dispositif d'amenée de fil dans un chalumeau soudeur et un dispositif d'alimentation en gaz, où chaque module additionnel (20), comme par exemple le dispositif d'amenée de fil (21) et/ou le dispositif d'alimentation en gaz (22) présente un support de données (31) comportant les données caractéristiques pour le module additionnel (20) respectif pour la commande du dispositif de commande (4) de l'appareil à souder (2) en un format défini, caractérisé en ce que le support de données (31) est formé par une étiquette (32), où est prévu pour la saisie des données du support de données (31) un dispositif de réception (33), où le dispositif de réception (33) et/ou une mémoire du dispositif de réception est relié par le circuit au dispositif de commande (4) de l'appareil à souder (2) ou est disposé sans fil, et le dispositif de réception (33) est formé par un appareil d'écriture et/ou de lecture (35), par exemple pour un code à barres, une bande magnétique.

2. Système de soudage selon l'une ou plusieurs des revendications précédentes, caractérisé en ce que le dispositif de réception (33) et/ou la mémoire transmet les données du support de données (31) au dispositif de commande (4) de l'appareil à souder (2) respectivement à la source de courant de soudage pour la détermination des paramètres de soudage individuels et/ou écrit respectivement mémorise les données du dispositif de commande (4) de l'appareil à souder (2) respectivement de la source de courant de soudage aux supports de données individuels (31) des modules additionnels individuels (2).

3. Système de soudage selon la revendication 1, caractérisé en ce que le dispositif de réception (33) est formé par un dispositif d'émission et/ou de réception (43, 44), par exemple pour un système à répondeur d'identification.

4. Système de soudage selon l'une ou plusieurs des revendications précédentes, caractérisé en ce que le dispositif de réception (33) est relié et/ou disposé avec le dispositif de commande (4) dans la source de courant de soudage.

5. Système de soudage selon l'une ou plusieurs des revendications précédentes, caractérisé en ce que le dispositif de réception (33) est relié par un dispositif de connexion au circuit ou un autre dispositif d'émission et/ou de réception (43, 44) pour l'échange des données avec le dispositif de commande (4) de la source de courant de soudage.

6. Système de soudage selon l'une des revendications précédentes, caractérisé en ce que sont mémorisées sur le support de données des informations additionnelles, comme par exemple la longueur du fil d'apport (25), la composition du fil d'apport (25) etc.

7. Système de soudage selon l'une ou plusieurs des revendications précédentes, caractérisé en ce que les données aux supports de données (31) sont formées par des numéros d'attribution, notamment par des adresses, et en ce qu'il est disposé dans le dispositif de commande (4) une mémoire dans laquelle sont mémorisées, pour les numéros d'attribution individuels, les données spéciales pour les modules additionnels (20).

8. Système de soudage selon l'une ou plusieurs des revendications précédentes, caractérisé en ce que sont mémorisées dans la mémoire, pour le support de données correspondant (31), notamment les numéros d'attribution de celui-ci, des informations additionnelles, comme par exemple des mesures de protection pour des gaz spéciaux (27) ou des alliages de fil.

9. Système de soudage selon l'une ou plusieurs des revendications précédentes, caractérisé en ce que la source de courant de soudage présente un dispositif d'entrée et/ou d'émission au moyen duquel des parties des supports de données (31) présentant les données respectivement les informations peuvent être traitées et/ou non traitées après la transmission du dispositif de réception (33) au dispositif de commande (4).

10. Système de soudage selon l'une ou plusieurs des revendications précédentes, caractérisé en ce que les paramètres de soudage de la source de courant de soudage pour un processus de soudage sont déterminés par les données des supports de données (31) respectivement des données mémorisées dans le dispositif de stockage et en ce que des paramètres de soudage additionnels, par exemple, le courant de soudage, peuvent être déterminés par le dispositif d'entrée et/ou d'émission (3).
